# EUROPÄISCHE PATENTSCHRIFT

(11) **EP 0 986 949 B1**
(45) Veröffentlichungstag und Bekanntmachung des Hinweises auf die Patenterteilung: **31.03.2004**
(21) Anmeldenummer: 99117921.9
(22) Anmeldetag: 14.09.1999
(51) Int. Cl.: A01G 9/12, A01G 9/02

(54) **Vorrichtung zum Aufnehmen von Pflanzen**
Device for holding plants
Dispositif pour maintenir des plantes

(30) Priorität: 14.09.1998 DE 29816452 U
(43) Veröffentlichungstag der Anmeldung: 22.03.2000
(73) Patentinhaber: Bauer, Manfred, D-91781 Weissenburg (DE)
(72) Erfinder: Bauer, Manfred, D-91781 Weissenburg (DE)
(74) Vertreter: Sasse, Volker, Dipl.-Ing.

(56) Entgegenhaltungen:
- WO-A-90/07266
- GB-A- 2 326 578
- US-A- 2 915 151
- US-A- 4 223 480
- US-A- 5 664 367

## Beschreibung

Aus der DE 87 15 048.4 U1 ist ein Baukörper zur Aufnahme von Kletterpflanzen bekannt. Dieser Baukörper wird von einem Drahtgitter gebildet, an dem sich Kletterpflanzen hochranken können. Andere als Kletterpflanzen können bei diesem bekannten Baukörper nicht eingesetzt werden. Der Baukörper hat außerdem den Nachteil, daß er aufgrund der Drahtgitterbauweise in unbewachsenem Zustand nicht schön aussieht. Solange der Baukörper nicht vollständig mit den Kletterpflanzen bewachsen ist, wirkt er daher in einem Garten wie ein Fremdkörper.

Aus der WO-A-90 07266 ist eine Pflanzensäule bekannt. Diese besteht aus einem U-förmigen Blechteil, in dem schräg nach oben gerichtete Rohrstutzen vorgesehen sind. Diese Rohrstutzen werden von Pflanzen durchdrungen.

Der Erfindung liegt die Aufgabe zugrunde, eine Vorrichtung der eingangs genannten Art zu schaffen, die sowohl als Ziergegenstand wie auch als Trennelement zu nutzen ist, die eine Vielzahl unterschiedlicher Pflanzen aufnehmen kann und die auch bei nicht voll ausgewachsenen Pflanzen schön aussieht.

Diese Aufgabe wird erfindungsgemäß mit den Merkmalen des Patentanspruchs 1 gelöst.

Die Vorrichtung gemäß Anspruch 1 weist wenigstens ein vertikal ausgerichtetes Bauelement auf, das von einer Platte gebildet ist. Eine Platte hat gegenüber einem Drahtgitter den Vorteil einer erhöhten mechanischen Stabilität, wobei die Vorrichtung einen günstigen optischen Eindruck hinterläßt. Um das plattenförmige Bauelement mit Pflanzen bestücken zu können, sind an diesem Behälter vorgesehen. In diese Behälter werden die Pflanzen eingesetzt, so daß sich deren Wurzeln nicht am unterseitigen Ende der Vorrichtung befinden müssen. Damit kann das Bauelement auch mit langsam bzw. niedrig wachsenden Pflanzen einfach bestückt werden, wobei trotzdem sofort eine gleichmäßige Bepflanzung der Vorrichtung erzielbar ist. Den bepflanzbaren Behältern sind Öffnungen im Bauelement zugeordnet, die von den Pflanzen durchdringbar sind. Diese Öffnungen weisen Ränder auf, die mit des Platte fluchten. Damit können die bepflanzbaren Behälter auf einer Seite der Vorrichtung untergebracht werden, während die Pflanzenblüten durch die Öffnung hindurch auf die Gegenseite des Bauelements wachsen. Alternativ ist es auch vorstellbar, die Behälter beidseits des Bauelements vorzusehen, wobei die Pflanzen teilweise durch die jeweiligen Öffnungen hindurchtreten und teilweise auf der Behälterseite wachsen. In jedem Fall kann unmittelbar nach dem Bepflanzen der Vorrichtung ein annähernd gleichmäßiger Bewuchs des Bauelements erzielt werden, so daß die Vorrichtung bereits nach der Bepflanzung einen günstigen optischen Eindruck hinterläßt. Vorzugsweise werden die Bauelemente aus Blechen gestanzt und ggf. gebogen bzw. abgekantet. Alternativ könnte das Bauelement auch aus Kunststoff gegossen werden. Sind die Bauelemente eben ausgebildet, so lassen sie sich zu den vorgenannten Zwecken universell einsetzen. Zur Bildung großflächiger Wände können die einzelnen Bauelemente einfach stirnseitig aneinandergesetzt werden. Zur Bildung von Türmen oder Pavillons werden diese vorzugsweise polygonartig aneinandergefügt, wobei ggf. Winkelleisten zwischen die Bauelemente gesetzt werden. Darüber hinaus ist das Einfügen von Schalen in die Türme möglich, so daß im oberen Bereich des Turmes eine Plattform zur Aufnahme von Blumen oder anderen Gegenständen einbringbar ist. Eine Schale hat dabei den besonderen Vorteil, daß diese sehr einfach bepflanzt werden kann, so daß insbesondere bei der Verwendung von hängenden Pflanzen das oberseitige Ende der Vorrichtung von den Pflanzen abdeckbar ist. Um auch runde Türme, Röhren oder runde Einbuchtungen in Wänden zu erstellen, ist es vorteilhaft, das Bauelement als gekrümmte Platte auszubilden. Je nach Größe des zu erstellenden Turmes kann das Bauelement einen Winkel von 180°, 120°, 90° oder weniger umfassen. Mit dieser besonderen Ausbildung der Bauelemente lassen sich vielfältige Gebilde erstellen und es können ohne Mehraufwand individuelle Wünsche erfüllt werden. Sind die die Pflanzen aufnehmbaren Behälter am Bauelement lösbar befestigt, so können die Behälter jederzeit mit den Pflanzen entfernt werden. Dies ist insbesondere beim Neubepflanzen der Behälter bzw. beim Zurückschneiden der Pflanzen vorteilhaft, da für diese Arbeiten die Pflanzen samt Behälter in einer bequemen Arbeitshöhe abgestellt werden können. Als lösbare Haltemittel können beispielsweise Haken eingesetzt werden, so daß die Behälter besonders einfach entnommen werden können. Die Behälter können direkt bepflanzt sein. Ebenso ist es denkbar, in die Behälter Töpfe, Tröge usw. einzusetzen, die selbst keinerlei Befestigungsmittel aufweisen müssen. Bestandteil der Erfindung ist auch, daß die die Pflanzen aufnehmbaren Behälter jeweils unterhalb der Öffnungen vorgesehen und Lösbar festgelegt sind. Die Pflanzen können auf diese Weise während ihres Wachstums besonders einfach die Öffnungen durchdringen, so daß der Pflanzenwuchs nicht durch entsprechende Maßnahmen zur Öffnung geleitet werden muß. Es ergibt sich so ein günstiges Aussehen der bepflanzten Vorrichtung.

Gemäß Anspruch 2 ist es vorteilhaft, die einzelnen Bauelemente zu einer größeren Einheit wie einer Wand, einem Turm, einen Pavillon, einen Torbogen, einen Wandelgang usw. zusammenzufügen. Eine Wand kann dabei als Sichtschutz an einer Grundstücksgrenze dienen, wobei die plattenförmige Ausbildung des Bauelements selbst bei spärlicher oder fehlender Bepflanzung einen ausreichenden Sichtschutz gewährleistet. Damit erfüllt die Vorrichtung auch im Winter bei nicht vorhandener oder zumindest unbelaubter Bepflanzung trotzdem ihre Funktion. Bei einer Ausbildung der Vorrichtung als Turm oder Pavillon wirkt sich die plattenförmige Ausbildung der Bauelemente besonders günstig auf die ästhetische Wirkung der Vorrichtung aus. Vorzugsweise sind die Bauelemente derart ausgebildet, daß sie trotz gleicher Ausgestaltung in vorgenannter Weise zusammenfügbar sind, so daß die Bauelemente wie ein Baukastensystem verwendet werden können.

Um die mechanische Stabilität des Bauelements zu erhöhen, ist es gemäß Anspruch 3 vorteilhaft, an mindestens einer Stirnkante einen flanschartig abgewinkelten Rand vorzusehen. Dieser bietet den zusätzlichen Vorteil, daß selbst bei einer dünnwandigen Ausbildung des Bauelements eine ausreichend breite Stirnfläche zur Verbindung aneinanderstoßender Bauelemente zur Verfügung steht. Damit lassen sich die Bauelemente bequem aneinanderfügen, wobei die Verbindung eine ausreichende Stabilität aufweist. Insbesondere können diese flanschartigen Ränder zur Verbindung der Bauelemente beitragen, indem dort Öffnungen für die Montagemittel wie Schrauben, Nieten usw. vorgesehen sind.

Sind die einzelnen Bauelemente gemäß Anspruch 4 durch lösbare Montagemittel aneinander bzw. an vertikalen Pfosten gehalten, so können die Bauelemente auch nachträglich in unterschiedlichen Konfigurationen aufgebaut werden. So können beispielsweise Bauelemente, die zunächst zu einem Turm zusammengefügt sind, bei Bedarf in eine Sichtschutzwand verwandelt werden. Die einzelnen Teile der Vorrichtung können dabei wiederverwendet werden. Außerdem ist der Transport der einzelnen Bauelemente einfacher, die dann jeweils vor Ort erst zusammengesetzt werden.

Vorteilhafte Ausbildungen der Montagemittel ergeben sich aus Anspruch 5. Schrauben ergeben einen besonders festen Halt der einzelnen Bauelemente und sind bei Bedarf leicht zu ersetzen. Dem gegenüber haben hinterschnittene Bolzen, die in Schlüssellöcher greifen den Vorteil, daß die Bauelemente besonders schnell demontiert und anschließend wieder zusammengefügt werden können. Dabei wird das Bauelement mit den Bolzen in das Schlüsselloch eingeführt, wobei sich der Bolzen beim Absenken des Bauelements selbsttätig arretiert.

Um den optischen Eindruck des Bauelements auch im unbepflanzten oder spärlich bepflanzten Zustand zu verbessern, ist es gemäß Anspruch 6 vorteilhaft, das Bauelement mit ornamentartigen Verzierungen zu versehen. Diese können beispielsweise durch Einprägungen oder eine entsprechende farbige Gestaltung des Bauelements vorgesehen sein. Diese ornamentartigen Verzierungen sind bevorzugt herausgestanzte Durchbrechungen. Die Durchbrechungen können zusammen mit den Öffnungen für die Pflanzen in einem einzigen Stanzschritt hergestellt werden, ohne daß hierdurch zusätzliche Herstellungskosten entstehen würden. Außerdem hinterlassen Durchbrechungen insbesondere bei Gegenlicht einen besonders vorteilhaften optischen Eindruck, der noch erhöht werden könnte, wenn die Durchbrechungen hinterleuchtet werden. Insbesondere beim Aufbau der Vorrichtung als Turm oder Pavillon können die erforderlichen Leuchten einfach innenseitig vorgesehen sein, wo sie dem Blick des Betrachters entzogen sind. Sie machen sich daher ausschließlich durch das Leuchten der ornamentartigen Durchbrechungen im Bauelement bemerkbar.

Um das Bauelement in sich stabiler zu gestalten, wenn nur eine sehr dünne Wandstärke verwendet wird, hat es sich als vorteilhaft erwiesen, wenn die Merkmale von Anspruch 7 zur Anwendung kommen. Außerdem wird die äußere und zu belangende Oberfläche glatter und es kann sich niemand an einer scharfen Kante verletzen.

Bevorzugte Ausführungsformen des Erfindungsgegenstandes werden beispielhaft anhand der Zeichnung beschrieben, ohne den Schutzumfang zu beschränken.

Es zeigt:
- Figur 1: eine erste Ausführungsform des erfindungsgemäßen Bauelements,
- Figur 2: eine Schnittdarstellung durch das Bauelement gemäß Figur 2,
- Figur 3: eine Schnittdarstellung einer alternativen Ausführungsform,
- Figur 4: eine von den Bauelementen gebildete Wand,
- Figur 5: eine Schnittdarstellung durch die Wand gemäß Figur 4 und
- Figur 6: einen Turm.

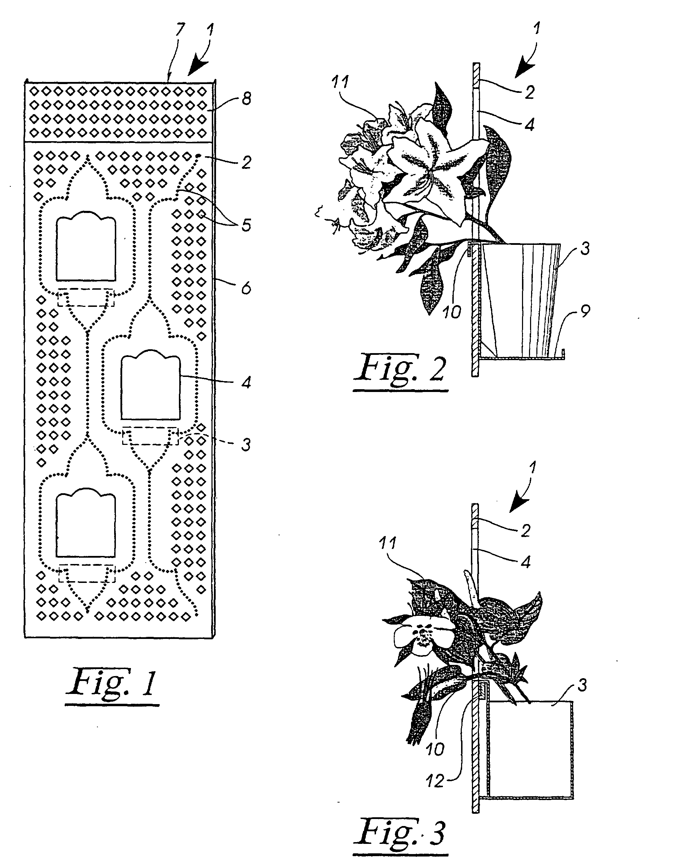

Figur 1 zeigt eine Vorderansicht eines Bauelements 1, mit dem eine Vorrichtung zum Aufnehmen von Pflanzen erstellt werden kann. Das Bauelement 1 wird von einer Platte 2 gebildet, an der rückseitig bepflanzbare Behälter 3 vorgesehen sind. Den bepflanzbaren Behältern 3 sind Öffnungen 4 im Bauelement 1 zugeordnet, wobei jeweils ein bepflanzbarer Behälter unterhalb einer Öffnung 4 vorgesehen ist. Die Öffnungen 4 sind in ihrer Größe derart bemessen, daß sie von den im Behälter 3 getragenen Pflanzen durchwachsen werden können. In der Figur 1 sind alle bepflanzbaren Behälter 3 auf der Rückseite der Platte 2 vorgesehen, so daß die Pflanzen durch die Öffnungen 4 hindurch auf die Vorderseite der Platte 2 wachsen. Alternativ ist es jedoch auch vorstellbar, die bepflanzbaren Behälter 3 wechselweise zu beiden Seiten der Platte 2 anzuordnen.

Damit das Bauelement 1 auch im unbepflanzten oder spärlich bepflanzten Zustand einen günstigen optischen Eindruck hinterläßt, sind in der Platte 2 ornamentartige Verzierungen in Form von Durchbrechungen 5 vorgesehen. Durch eine in der Figur 1 nicht dargestellte, hinter der Platte 2 angeordnete Lichtquelle können die Durchbrechungen 5 hinterleuchtet werden, um den günstigen optischen Eindruck des Bauelements 1 zu unterstreichen. Die Öffnungen 4 und Durchbrechungen 5 sind jedoch so bemessen, daß sie höchstens 50 %, vorzugsweise höchstens 25 % der Plattenfläche 2 ausmachen. An beiden vertikalen Seitenkanten 14 sind am Bauelement 1 Flansche 6 angeformt, die sich senkrecht zum Bauelement 1 erstrecken. Alternativ könnten auch nur eine vertikale Seitenkante 14 oder zusätzlich die horizontalen Kanten mit Flanschen 6 ausgerüstet sein. Im oberen Bereich 7 ist an der Platte 2 eine Kronleiste 8 gehalten, die den oberen Abschluß des Bauelements 1 bildet.

Aus der Schnittdarstellung gemäß Figur 2 ist insbesondere die Halterung für den bepflanzbaren Behälter 3 ersichtlich. Der bepflanzbare Behälter 3 ist auf einer horizontalen Ablagefläche 9 abgestellt, die über lösbare Haltemittel 10 an der Platte 2 gehalten ist. Die lösbaren Haltemittel 10 werden von einem die Öffnung 4 durchdringenden Haken gebildet, so daß eine stabile Auflage für den bepflanzbaren Behälter 3 gegeben ist. Die Pflanze 11 wächst aus dem Behälter 3 durch die Öffnung 4 auf die Gegenseite der Platte 2 hindurch.

Figur 3 zeigt eine alternative Ausführungsform der Halterung des bepflanzbaren Behälters 3. Bei dieser Ausführungsform sind am Behälter 3 die Haltemittel 10 einstükkig angeformt, so daß der gesamte Behälter 3 unmittelbar an der Platte 2 eingehängt werden kann. Um ein Durchgreifen der Öffnung 4 durch die Haltemittel 10 zu vermeiden, ist bei dieser Ausführungsform an der Platte 2 ein behälterseitig vorgesehener Anschlag 12 vorgesehen, der von den Haltemitteln 10 des Behälters 3 hintergriffen wird. Alternativ ist es auch vorstellbar, den bepflanzbaren Behälter direkt an der Platte 2 anzuformen oder unlösbar festzulegen.

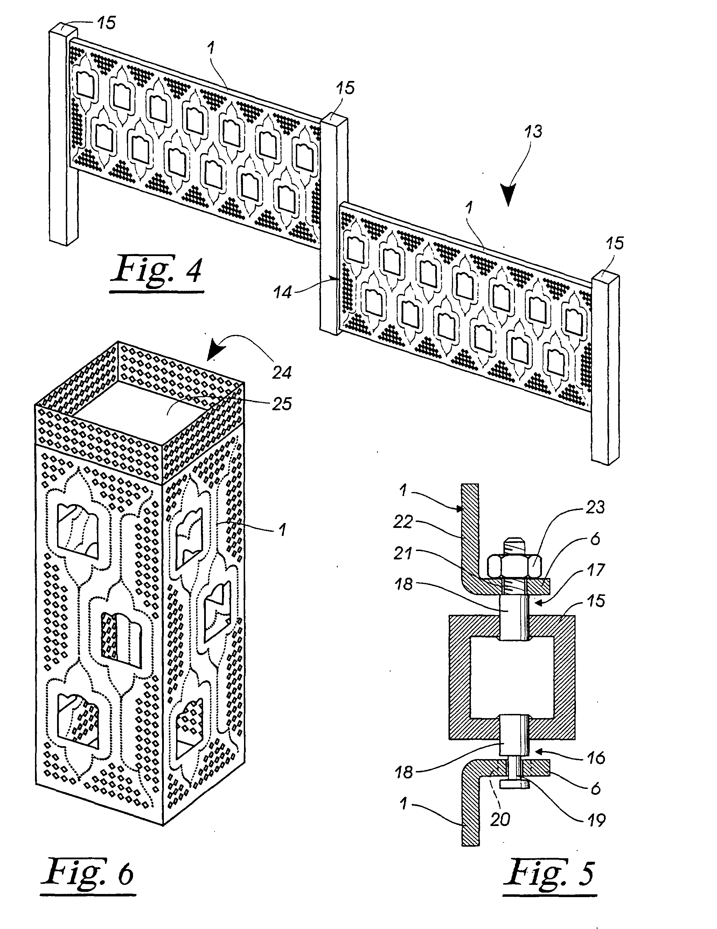

Figur 4 zeigt eine Wand 13, die aus zwei Bauelementen 1 gebildet ist. Die Bauelemente 1 sind an ihren Stirnkanten 14 an vertikalen Pfosten 15 gehalten. Um beispielsweise eine Angleichung der Bauelemente 1 an eine Hanglage oder ähnliches zu erreichen, sind die Bauelemente 1 in unterschiedlichen Höhenlagen an den Pfosten 15 festlegbar.

Figur 5 zeigt eine Schnittdarstellung durch einen Pfosten 15 gemäß Figur 4. An beiden stirnseitig an den Pfosten 15 stoßenden Bauelementen 1 sind randseitig um 90° abgewinkelte Flansche 6 angeformt, um sie an den Pfosten 15 durch Montagemittel 16, 17 festlegen zu können.

Die Montagemittel 16 werden von einem im Pfosten 15 festgeschweißten Bolzen 18 gebildet, der eine Hinterschneidung 19 aufweist. Im Flansch 6 des Bauelements 1 ist eine zum Bolzen 18 korrespondierende Schlüsselbohrung vorgesehen, die nach unten erweiternd ausgebildet ist. Diese Schlüsselbohrung 20 ist derart ausgebildet, daß der Bolzen 18 durch den unteren Bereich der Schlüsselbohrung 20 hindurchtreten kann. Bei Verschiebung des Bauelements 1 nach unten dringt der Bolzen 18 mit seiner Hinterschneidung 19 in den verengten Bereich der Schlüsselbohrung 20 ein, so daß sich das Bauelement 1 am Bolzen 18 arretiert. Diese Ausbildung der Montagemittel 16 ist besonders einfach zu montieren und anschließend wieder abzubauen, so daß der Benutzer die Bauelemente 1 jederzeit nach seinen Bedürfnissen arrangieren kann.

Alternativ sind im oberen Bereich der Figur 5 Montagemittel 17 dargestellt, bei denen der Bolzen 18 mit einem Gewinde 21 versehen ist. Der Flansch 6 des Bauelements 1 ist mit einer entsprechenden Bohrung 22 ausgebildet, die vom Gewindebolzen 18 durchdringbar ist. Damit kann das Bauelement 1 durch eine Mutter 23 am Pfosten 15 arretiert werden.

Figur 6 zeigt eine alternative Anordnung der Bauelemente 1 zu einem Turm 24. Bei diesem Turm 24 sind die bepflanzbaren Behälter 3 vorzugsweise innenseitig angeordnet, so daß sie den Blicken des Betrachters vollständig entzogen sind. Im oberen Bereich des Turmes 24 ist eine Schale 25 vorgesehen, die wie die Behälter 3 ebenfalls bepflanzbar ist.

Alternativ könnte der Turm 24 auch aus segmentartig gebogenen Bauelementen 1 aufgebaut sein, um einen kreisrunden Querschnitt zu erzielen. Werden zwischen den einzelnen Bauelementen 1 entsprechend ausgebildete, nicht dargestellte Winkelleisten gesetzt, so kann der Winkel zwischen den einzelnen Bauelementen 1 entsprechend angepaßt werden. Auf diese Weise ist es möglich, statt einem Turm mit quadratischem Querschnitt auch einen vieleckigen, polygonalen Querschnitt zu erzielen. Hierdurch wird die vom Turm 24 eingeschlossene Fläche entsprechend vergrößert, so daß der Turm 24 auch als Pavillon genutzt werden kann.

### Bezugszeichenliste

- 1: Bauelement
- 2: Platte
- 3: bepflanzbarer Behälter
- 4: Öffnung
- 5: Durchbrechung
- 6: Flansch
- 7: oberer Bereich
- 8: Kronleiste
- 9: horizontale Ablagefläche
- 10: Haltemittel
- 11: Pflanze
- 12: Anschlag
- 13: Wand
- 14: Stirnkante
- 15: Pfosten
- 16, 17: Montagemittel
- 18: Bolzen
- 19: Hinterschneidung
- 20: Schlüsselbohrung
- 21: Gewinde
- 22: Bohrung
- 23: Mutter
- 24: Turm
- 25: Schale

## Patentansprüche

1. Vorrichtung zum Aufnehmen von Pflanzen (11), insbesondere von Zierpflanzen, wobei die Vorrichtung mindestens ein im wesentlichen vertikal ausgerichtetes, mit Öffnungen (4) versehenes Bauelement (1) aufweist, wobei das Bauelement (1) von einer Platte (2) gebildet ist, an der Pflanzen (11) aufnehmende Behälter (3) vorgesehen sind, denen die Öffnungen (4) im Bauelement (1) zugeordnet sind, **dadurch gekennzeichnet, daß** das Bauelement (1) als ebene oder gekrümmte, einen Teilabschnitt eines Zylinders bildende Platte (2) ausgebildet ist, und die Öffnungen (4) Ränder aufweisen, welche mit der Platte (2) fluchten und die Behälter (3) am Bauelement (1) lösbar und unterhalb der Öffnungen (4) vorgesehen und festgelegt sind.

2. Vorrichtung nach Anspruch 1, **dadurch gekennzeichnet, daß** die Bauelemente (1) zu einer Wand (13) oder räumlichen Gebilden (24) wie Turm, Pavillon, Torbogen zusammenfügbar sind.

3. Vorrichtung nach mindestens Anspruch 1 oder 2, **dadurch gekennzeichnet, daß** das Bauelement (1) an mindestens einer Stirnkante (14) einen flanschartigen, abgewinkelten Rand (6) aufweist, der zur Aufnahme von Montagemitteln (16, 17) ausgebildet ist.

4. Vorrichtung nach mindestens einem der Ansprüche 1 bis 3, **dadurch gekennzeichnet, daß** die Bauelemente (1) durch lösbare Montagemittel (16, 17) aneinander oder an einem vertikalen Pfosten (15) gehalten sind.

5. Vorrichtung nach Anspruch 4, **dadurch gekennzeichnet, daß** die Montagemittel (16, 17) von Gewindebolzen (18, 21) und/oder hinterschnittenen Bolzen (18, 19) gebildet sind, die in Schlüsselbohrungen (20) greifen.

6. Vorrichtung nach mindestens einem der Ansprüche 1 bis 5, **dadurch gekennzeichnet, daß** das Bauelement (1) mit einer ornamentartigen Verzierung ausgestattet ist, welche von Durchbrechungen (5) gebildet ist.

7. Vorrichtung nach mindestens einem der Ansprüche 1 bis 6, **dadurch gekennzeichnet, daß** die Ränder der Durchbrechungen (5) nach einer Seite, bei räumlichen Gebilden (24) zur Innenseite, gebördelt sind.

## Claims

1. Device for receiving plants (11), especially ornamental plants, the device comprising at least one substantially vertical structural element (1) having a series of holes (4) and being formed by a plate (2) carrying containers (3) receiving the plants (11) and corresponding to the holes (4) in the structural element (1), **characterised in, that** the structural element (1) is planar shaped or cylindrically shaped, forming a sector of a cylinder and the holes (4) comprising edges being in line with the plate (2) and the container (3) being removable mounted at the structural element (1) below the hole (4).

2. Device according to claim 1, **characterised in, that** the structural elements (1) can be combined to a wall (13) or three dimensional objects (24) like a tower, pavilion or door arc.

3. Device according to claim 1 or 2, **characterised in, that** the structural element (1) comprising a flangelike angled edge (6) for receiving mounting means (16, 17).

4. Device according to at least one of claims 1 to 3, **characterised in, that** the structural elements (1) being attached to another element (1) or to a vertical post (15) by a detachable mounting means (16, 17).

5. Device according to claim 4, **characterised in, that** the mounting means (16, 17) is formed by screwed bolts (18, 21) and/or undercut bolts (18, 19) engaging key boreholes (20).

6. Device according to at least one of claims 1 to 5, **characterised in, that** the structural element (1) containing ornamental designs being formed by breakthroughs (5).

7. Device according to at least one of claims I to 6, **characterised in, that** the edges of the breakthroughs (5) being angled to one side, in the case of three dimensional objects (24) to the inner side.

## Revendications

1. Dispositif pour recevoir des plantes (11), en particulier des plantes ornementales, le dispositif présentant au moins un élément constructif (1) orienté sensiblement verticalement et pourvu d'ouvertures (4), l'élément constructif (1) étant constitué d'une plaque (2) sur laquelle sont prévus des conteneurs (3) recevant des plantes (11), **caractérisé en ce que** l'élément constructif (1) est réalisé en plaque (2) plane ou cintrée constituant une section partielle d'un cylindre et les ouvertures (4) comportent des bords qui sont alignés avec la plaque (2) et les conteneurs (3) sont prévus et fixés de manière amovible sur l'élément constructif (1) et en-dessous des ouvertures (4).

2. Dispositif selon la revendication 1, **caractérisé en ce que** les éléments constructifs (1) peuvent être rassemblés pour former une paroi (13) ou des structures spatiales (24) telles qu'une tour, un kiosque, une arche.

3. Dispositif selon au moins la revendication 1 ou 2, **caractérisé en ce que** l'élément constructif (1) présente à au moins une arête frontale (14) un bord (6) coudé à la manière d'une bride, qui est réalisé pour recevoir des moyens de montage (16, 17).

4. Dispositif selon au moins l'une des revendications 1 à 3, **caractérisé en ce que** les éléments constructifs (1) sont tenus les uns aux autres ou sur un poteau (15) vertical par des moyens de montage (16, 17) amovibles.

5. Dispositif selon la revendication 4, **caractérisé en ce que** les moyens de montage (16, 17) sont constitués par des boulons filetés (18, 21) et/ou des boulons contre-dépouillés (18, 19) qui viennent en prise dans des perçages en trou de serrure (20).

6. Dispositif selon au moins l'une des revendications 1 à 5, **caractérisé en ce que** l'élément constructif (1) est pourvu d'une décoration ornementale qui est constituée par des percées (5).

7. Dispositif selon au moins l'une des revendications 1 à 6, **caractérisé en ce que** les bords des percées (5) sont rabattus vers un côté, vers le côté intérieur dans le cas de structures spatiales (24).
